# EUROPEAN PATENT APPLICATION

(11) **EP 2 131 630 A2**
(43) Date of publication of application: **09.12.2009**
(21) Application number: 09425216.0
(22) Date of filing: 29.05.2009
(51) Int. Cl.: H05B 37/02, H05B 37/03, H05B 33/08

(54) **Smart led street lamp designed for saving energy, monitored and controlled by a remote control center**

(30) Priority: 06.06.2008 IT TR20080002 U
(71) Applicant: Tecnologie e Servizi Innovativi - T.S.I. S.r.l., 05100 Terni (TR) (IT)
(72) Inventor: Sensidoni, Claudio , T.S.I. S.r.l., 05100 Terni (IT)

(57) **Abstract**

**SUMMARY:** The new model of intelligent utility led street lamp (named OSIRIDE-BRE) allows for the illumination of public and/or private sites while saving the maximum amount of energy by varying the degree of brightness based on the actual light requirement of the site. Allows the automatic recovery of the natural decay of the luminous light stream emitted by the LED and the automatic recovery of luminous light stream reductions caused by LED malfunctions. The automatic recovery of luminous light stream is obtained by increasing the piloting current from the exercise value to the maximum applicable to the various LED families.

## Description

**BACKGROUND ART:** The new model of intelligent utility led street lamp (named OSIRIDE-BRE) allows for the illumination of public and/or private sites while saving the maximum amount of energy by varying the degree of brightness based on the actual light requirement of the site.

The street lamp energy saving systems on the market today are only based on the choking of light according to static and/or semi-static time calendars. The OSIRIDE-BRE works in a dynamic way constantly regulating brightness according to the actual requirements of the moment. The brightness related to the state of "maximum energy saving" can be precisely programmed, thanks to the PWM command for led illuminating bodies, which permits dealing with the various logistic (automatic recovery from the natural decay of the luminous light stream by the LED and/or the malfunctions by the LED until max 30% of total) and installation requirements (private sites, main streets, secondary streets, squares, etc.)

In short the new utility model of OSIRIDE-BRE led street lamp and its management system is novel and advantageous compared to existing products because the led piloting techniques and the innovational managing of the illuminance variations allow for 48% to 90% reduction in energy costs, compared to what is available on the market today. Our led street lamp is far more superior to the street lamps equipped with traditional bulbs. Another important advantage is the reduction in maintenance costs and the availability of environmental data at the mere cost of sensors, due to the fact that the communication infrastructure, the centralized processor and the remote control center of the street lamps are one and the same.

### DESCRIPTION:

The present model regards a led street lamp (OSIRIDE-BRE) that contemporarily integrates all the functions and the necessary elements in order to dynamically manage the reduction of energy costs, the supervision and the remote control and finally the accessory function for the monitoring of environmental parameters (Noise, Carbon monoxide, Ozone, Fine dust). The integration of the functions provides an economic advantage by using less elements and eliminating the need for external cabled parts and feeding the control wire harness and command for the centralized supervision with points which are governed by simple and intuitive interfaces.

The OSIRIDE-BRE led street lamp with these characteristics provides illumination while maximizing the saving of energy costs both in private and public sites.

The OSIRIDE-BRE led street lamp is produced in three different power ratings (60 W, 120 W, 240W); it has a high performance rate (90%), and is powered by a 230 Vac power grid or a solar/photovoltaic panel with a buffer/floating battery.

OSIRIDE-BRE is structured with three levels of intelligence, the first is dedicated to energy saving strategies and recovery the luminous light stream, the second to wireless communication and the third (optional) is reserved for the reading of environmental parameters.

The first level of intelligence on board the OSIRIDE-BRE allows for the detection of movement either on the part of people or means of transport within the lit area and therefore is able to adjust brightness from the state of "maximum energy saving" to that of "standard lighting". This level allows also to recover:
- the natural decay of the luminous light stream emitted by the LED obtained by increasing the piloting current from the exercise value to the maximum applicable to the various LED families (e.g. 245÷350 mA per REFOND, 350÷750 mA per CREE XPE, 350÷1000 mA per CREE XPG);
- of luminous light stream reductions caused by LED malfunctions (max 30% of total) obtained by increasing the piloting current from the exercise value to the maximum applicable to the various LED families (e.g. 245÷350 mA per REFOND, 350÷750 mA per CREE XPE, 350÷1000 mA per CREE XPG);

The OSIRIDE-BRE led street lamp uses white led illuminating bodies or three color RGB led luminous bodies in order to produce choreographic lighting effects in particularly prominent architectural sites like boulevards, squares, parks, etc. The OSIRIDE-BRE led street lamp is also provided with an auto diagnostic function, which is based on voltage sensors, current, temperature, and luminance in order to continually verify that it is functioning correctly.

The second level of intelligence on board the OSRIDE-BRE street lamp permits cooperation between a set of Lamps on a block of variegated development (linear, tree shaped, star shaped, and/or combinations of the above), therefore maximizing energy saving and at the same time providing efficient and comfortable lighting of the site.

Wireless communication between the OSRIDE street lamps operates on a free band (433 MHz, 8686 MHz, 2400 MHz). Together with the implemented management algorithm, it allows a set of lights to transit between the state of "maximum saving" and "normal illumination" only when necessary. Therefore, eliminating continuous variation of illumination when the site is busy in an intermittent way and for short periods of time.

The capacity of the OSIRIDE-BRE principal street lamp (MASTER) for wireless communication with the control center (GPRS, UMTS, WI-FI, WI-MAX) allows for the realization of illumination systems with monitored reading of environmental parameters monitored and governed by remote control with minimum maintenance costs.

The third level of intelligence (optional) on board the OSIRIDE street lamp deals with managing the interface of the sensors of the environmental parameters (noise, carbon monoxide, ozone, fine dust, etc.), verifying the correct functioning and transmitting this information spontaneously and/or upon request to the remote control center. Each OSIRIDE-BRE street lamp is preset to contain and feed the module of environmental sensors.This module is optional for the correct functioning of the OSIRIDE-BRE street lamp. The actual equipment depends only upon the use and upon the feed availability even when the lamp is off.

The new utility model is illustrated in the four attached drawings (Fig 1, Fig. 2, Fig. 3, Fig. 4). The First (Fig. 1) shows the scheme of sets of OSIRIDE led street lamps complying with the new model, the second drawing (fig. 2) shows the physical realization of the model, the third drawing (fig. 3) the typical system configuration in which more led street lamp sets/blocks operate, and finally the fourth (fig. 4) the characteristics of the supervision and control center.

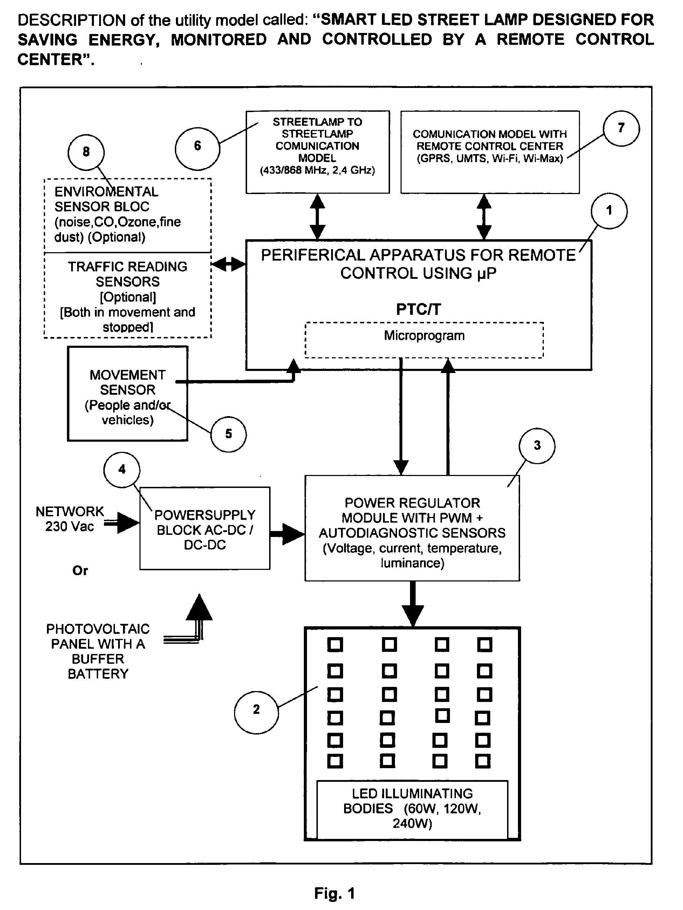

With reference to the first drawing (Fig.1): **(1)** is a peripheral apparatus for remote control, a microprocessor called (PTC/T), it is the heart of the led street lamp and it governs all of its functions. It has a micro-program to guarantee the product an opportune operational flexibility, the necessary means for obtaining environmental parameters, and all the functions of acquiring, command auto-diagnostics and communication that characterize the OSIRIDE-BRE led street lamp; **(2)** is the set of led illuminating bodies realized with modular elements placed in a matrix. The 240 watt led street lamp is realized with 24 elements placed in 6 horizontal lines and 4 columns; the 120 W and the 60 W sizes are obtained by under equipping the configuration at a higher power. The led elements are usually white light for standard type illumination or three-colored RGB for the illumination of monuments or similar sites of respect. The piloting of the emitter light elements is set so as to maximize energy savings, minimize the dissipation of heat and to double the life time of led, from 50000 hours when used at a nominal power to over 100000 hours when used with OSIRIDE-BRE implemented management characterized by the reduction of led piloting voltage compared to the nominal value; **(3)** is made up of power adjusters PWM fed by a power feeder (4) and piloted by PTC/T (1) and by sensors (Voltage, Current, Temperature, Luminance) utilized by the auto-diagnostic function to determine the correct functioning of the led street lamp; **(4)** is the network power supply block 2230 Vac or photovoltaic panel with a buffer battery, it transforms the voltage of an alternate network into continuous current adapt to pilot led elements, the block is characterized by galvanic transformer separation and integrates the protection of excess voltage and excess current; **(5)** is the sensor that notes the movement of people and/or vehicles within the area illuminated by the street lamp, the detection of movement and the elaboration on the part of the PTC/T (1) is communicated immediately to the other lamps on the block through the wireless communicator module (6). As a result, there is a contemporary increase in brightness to the level of "normal illumination" of a number "N" of elements in a contiguous way before and after the lamp that noted the movement. The number of lamps that come on and the length of time that they stay on before returning to the state of "maximum energy saving" is determined by a table of parameters, which can by modified by the remote control center; **(6)** is the local wireless communication module between the lamps, it has a radio reach which consents for communication with at least 4 lamps before it and 4 lamps behind it, placed at a distance of 30 m from each other, within this range the continuity of the radio chain is guaranteed even if one or more of the elements breaks and/or malfunctions. When the set of lamps is realized according to canonic parameters of a MESH network, type ZigBee the communication conditions are much more favorable; **(7)** is the communication module with the remote control center, this module is present only in the principal street lamp (MASTER). Communication with the center is usually spontaneous for signaling warnings or answering messages originating from the center for the acquisition/command and/or variation in the functional table of parameters which reside within the PTC/T (1); **(8)** is an optional environmental sensor block (Noise, Carbon monoxide, Ozone, Fine Dust), and both moving and stopped traffic reading sensors; these sensors are fed by the network power supply block (4) and managed by the PTC/T (1) peripheral device.

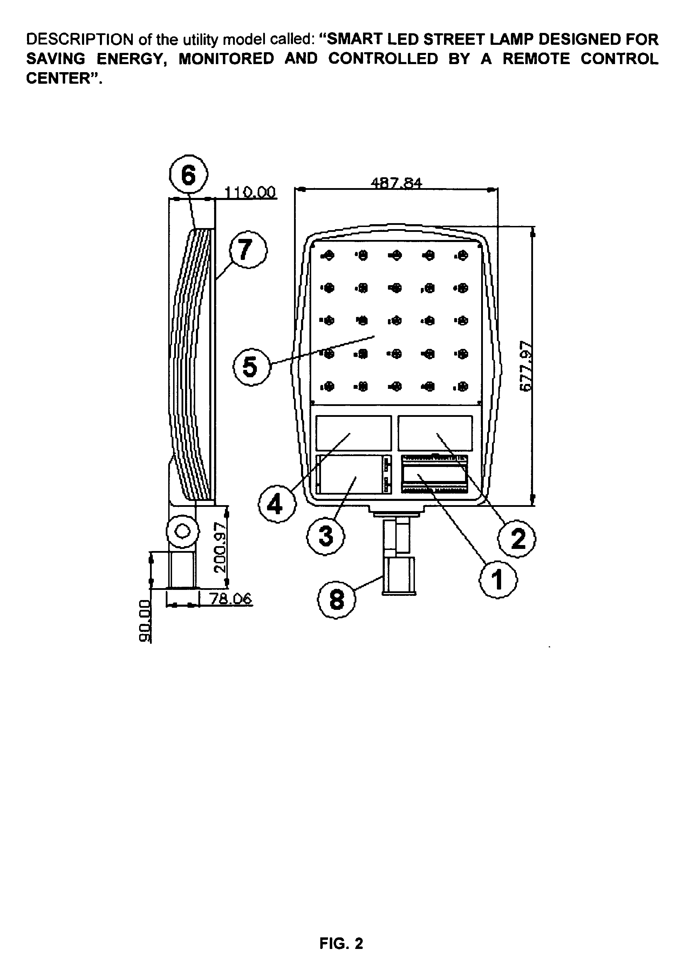

Specifically in the second drawing (Fig. 2): **(1)** is the remote control (PTC/T) peripheral device, the micro-program put on board is the smart part that implements all the functions of the OSIRIDE-BRE led street lamp; **(2)** is the lamp to lamp and the principal lamp (MASTER) to remote control center communication module; **(3)** is the transformer that converts the voltage of the 230 Vac network, or alternatively the power provided by the combination of the photovoltaic panel and the buffer battery, into current to pilot the led OSIRIDE-BRE luminance elements; **(4)** is the optional module for the environmental parameters sensor; **(5)** is the whole made up of the led white light luminance bodies or the three color RGB, the power adjuster PWM, the sensor for the reading of movement of either people or vehicles and the auto-diagnostic sensors; **(6)** is the upper container of the led OSIRIDE-BRE street lamp, it encloses the elements of the lamp, it guarantees anchorage to the pole with a moveable staff in a gradual way on a horizontal and vertical axis and finally it dissipates the heat produced by the led modules. The upper container is made with very low thermal resistance material and conformed in a favorable manner in order to allow for the transmission of heat so as to have a thermal resistance lower than 0,3°C/W; **(7)** is the lower container of the OSIRIDE-BRE led street lamp, it protects the lamp from the atmospheric agents and together with the upper container (6) guarantees an IP 65 which allows the light from the led illuminated elements to pass with the least amount of dimming. It is made of transparent lexan so as to minimize weight.

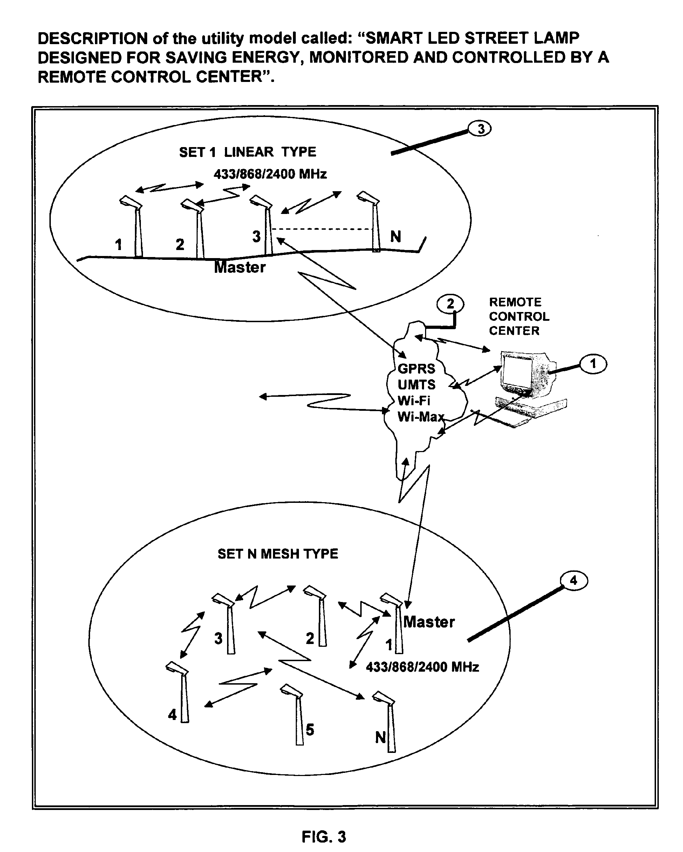

Regarding the third drawing (Fig. 3): **(1)** is the remote control center (SVC LAMPIONI) that carries out the monitoring and the remote control of thousands of sets of OSIRIDE-BRE led street lamps which are organized in different shapes (Linear, Star shaped, Mesh, etc.). SVC LAMPIONI is a remote control supervision system that automatically manages the operations of verification and of command of the Lamps in order to save energy. The continuous monitoring provides Real Time management of signals, commands, regulating and measuring so as to monitor all of the Lamps involved. The system developed completely in Windows or Linux and based on the database SQL Server, offers a graphic interface, which is extremely intuitive and easy to use, the mouse can be used to operate all of its functions. The structure of the system (video page, database, etc.) is totally parametric and can be defined by the user, who therefore has the possibility to personalize the descriptions, colors, conditions and modality of the alarm signals, etc. These signals are not only highlighted on the video but they are also printed in the service log and memorized in the historic database; both functions however, may be deactivated by the operator during the normal use of the remote control. The system SVC LAMPIONI is made up of:
° A Supervision and Remote control center
° Lamp management boards
° Communication between the Centre and the Lamps

The center is made up of a operative station based on a server where the SVC LAMPIONI supervision and remote control software is installed, and from one or more optional client stations connected to the server through intranet/internet, where the maps are visualized with data of the lamps being monitored in Real Time.

The remote communication through GPRS/UMTS, WIFI, WIMAX may require the activation of the ADSUHDSL line with a static IP address of one of the telecommunication companies, the local communication like WI-FI are needed by the maintainer for verifications and for testing, Standard Radio and/or Zigbee communications allow for the exchange of data between the lamps.

The SVC LAMPIONI software of the Supervision and remote control center is the heart of the system. In fact, it is through this software that the user learns the dislocation of the Lamps (geo-localizer) and the characteristics of the service provided in Real Time. The functions of statistic analysis are just as important as the SVC LAMPIONI software, as they operate on the basis of the historic data generated by the data gathered in Real Time and/or Deferred Time from the data logged onto the apparatus.

It is possible to configure the SVC LAMPIONI center so as to best serve the various logistic realities of the geo-location of the Lamps. The configuration is based on maps with two zoom levels (the complete monitored area and detailed area) with preestablished and semi-static geo-references, it is suitable for those realities where the geolocalization is by nature restricted to a delimited geographic area (park paths or defining areas, port yards, etc.). The advantage of this solution is the total independence from internet connection availability in order to connect to the site that provides satellite maps, the representation of the lamps on the map of the geographic area of interest are always available because they are memorized by the same server that manages communication with the lamps.

When, instead, the geographic field of reference of the monitored lamps is vast (whole Cities, Municipalities, Provinces, Regions, States, etc.) and not known, it is not convenient to prearrange all the necessary maps for the geo-location. It is necessary to use global scale satellite maps available through providers such as Google Maps, Microsoft's Virtual Earth and Yahoo's Maps. It is reasonable to accept dependence on the Internet connection in this kind of application, the product uses the satellite maps of Virtual Earth.

Continuing the description of drawing n. 3 **(2)** are the wireless public communication vectors (GPRS, UMTS, WI-FI, WI-Max) which can be utilized by the system in order to communicate between the principal lamp (MASTER) and the remote control center. The software functions dedicated to communication are realized with specific protocol that minimizes the vector band loading. **(3)** Is a set of OSIRIDE-BRE led street lamps organized in a linear installation type (e.g. Street), the set of lamps communicate among themselves through wireless free band vectors (433/868/2400MHz), the MASTER also communicates with the Remote Control Center; **(4)** is a set of OSIRIDE-BRE led street lamps organized in a MESH installation type (e.g. Squares, Parking lots, etc.), the street lamps communicate among themselves through wireless free band vectors (433/868/2400 MHz), the MASTER also communicates with the Remote Control Center.

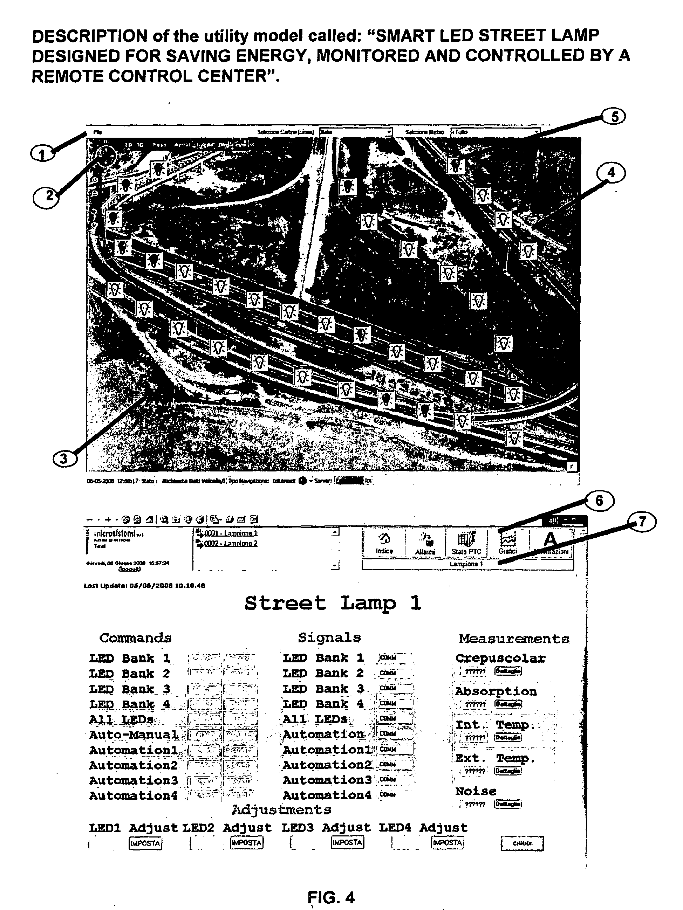

Regarding the fourth drawing (Fig. 4): **(1)** is the principal mask of the Remote Control Center where one or more sets of OSIRIDE-BRE led street lamps are highlighted in a geo-referenced way with a graphic and intuitive layout; **(2)** is the operative element, which allows for navigation between the sets of led OSIRIDE-BRE street lamps governed by the Remote Control Center; **(3)** is the geographic map where the individual led OSIRIDE-BRE street lamps are geo - referenced and governed by the Remote Control Center; **(4)** is the iconographic indicator of a OSIRIDE-BRE led street lamp that indicates whether the lamp is active and/or out of commission, the difference between the two states is carried out through different colors, yellow indicates the street lamp is on, red indicates that the lamp is out of commission; **(5)** is the iconographic indicator of a non-active led OSIRIDE-BRE street lamp, this signal is carried out through a neutral color. Clicking on the icon of each street lamp with the mouse, one accesses "tool-tips" which show the detailed parameters of each individual element; **(6)** is the detailed mask dedicated to a OSIRIDE-BRE led street lamp in which the operator can see the details of the monitored sizes; **(7)** is the part of the detailed mask of a led lamp where necessary information is available and/or the command buttons used to interact with the selected lamp.

## Claims

1. "SMART LED STREET LAMP DESIGNED FOR SAVING ENERGY, MONITORED AND CONTROLLED BY A REMOTE CONTROL CENTER" without need of external added elements, fed directly by electricity of 230Vca network or by a photovoltaic panel with a buffer battery;

2. "SMART LED STREET LAMP AIMED AT/DESIGNED FOR SAVING ENERGY, MONITORED AND CONTROLLED BY A REMOTE CONTOL CENTER", as claimed in claim 1, **characterized by** the ability to operate in blocks/sets of various topological configurations (linear, tree shaped, star shaped, and/or combinations of the above), each lamp cooperates with the others and through the master lamp cooperates with the remote control center.

3. "SMART LED STREET LAMP DESIGNED FOR SAVING ENERGY, MONITORED AND CONTROLLED BY A REMOTE CONTROL CENTER", as claimed in claims 1 and 2, **characterized by** the contemporary integration in a single apparatus of the following functions:
○ Multiple communication interface for vector support:
i. Radio for free range 433/868 MHz, 2,4 GHz for the connection between the lamps.
ii. Radio for public vectors GPRS, UMTS, WI-FI, Wi-Max for the connection between MASTER street lamps and the remote control center with minimum occupation of the band.
○ Multiple operative configuration to produce non predefined topology connections and redundant types such as Point-Multipoint (MESH network) with the ability to overcome and to guarantee a correct functioning even in the presence of a malfunctioning node.
○ Management of sensors reserved for auto-diagnosis (voltage, current, temperature, luminance);
○ Management of sensor for detection of movement of people and/or vehicles within the illumination radius of the led OSIRIDE-BRE street lamp;
○ Management of the sensors reserved for the measuring/reading of environmental parameters (Noise, Carbon Monoxide, Ozone, Fine Dust);
○ Management of the led illuminating bodies in three colors RGB in order to produce illuminating choreographic effects (for particular architectural sites such as boulevards, squares, parks, etc.) for the whole set of OSIRIDE-BRE street lamps.

4. "SMART LED STREET LAMP DESIGNED FOR ENERGY SAVING, MONITORED AND CONTROLLED BY A REMOTE CONTROL CENTER" as claimed in claims 1, 2, and 3, **characterized by** supervision and control by the remote control center with the following functions:
○ Management of the video pages associated to the led street lamps for the acquisition of state of lamp signals;
○ Facilitated management of the list of street lamp alarms determined by the auto-diagnostic function on board every lamp;
○ Management of the Commands and Adjustments for the switching on and the variation of the luminosity of the street lamps;
○ Acquisition of the total electric absorption of the lamp;
○ Acquisition of the sensor for adjusting luminosity;
○ Acquisition of the internal temperature of the single lamp;
○ Acquisition of the sensor for the detection of movement of persons and/or vehicles in the area illuminated by the lamp;
○ Acquisition of the optional sensors for the environmental parameters (Noise, Carbon Monoxide, Ozone, Fine Dust, etc.) and of the sensors for the reading of stopped and moving traffic;
○ Activation/deactivation by the Center of every single function of the street lamp (control of absorption variation, luminosity variation, internal temperature control, activation presence control);

5. "SMART LED STREET LAMP DESIGNED FOR SAVING ENERGY, MONITORED AND CONTROLLED BY A REMOTE CONTROL CENTER", as claimed in claims 1,2,3 and 4 **characterized by** an automatic variation of the luminous light stream through dedicated hardware and firmware functions which carry out the following functions:
○ Automatic recovery from the natural decay of the luminous light stream emitted by the LED obtained by increasing the piloting current from the exercise value to the maximum applicable to the various LED families (e.g. 245÷350 mA per REFOND, 350÷750 mA per CREE XPE, 350÷1000 mA per CREE XPG);
○ Automatic recovery of luminous light stream reductions caused by LED malfunctions (max 30% of total) obtained by increasing the piloting current from the exercise value to the maximum applicable to the various LED families (e.g. 245÷350 mA per REFOND, 350÷750 mA per CREE XPE, 350÷1000 mA per CREE XPG);
○ Implementation of a operation calendar working on a monthly basis with indications of the regime luminous light stream rate and of the luminous light stream rate reduced in time slots of the type From/to;
○ Functional reliability obtained by executing luminous light stream recovery strategies and by communicating to the remote control center all alarms and critical levels detected during the auto diagnostic cycle;
○ Fulfillment of the client's needs executed through variations of functioning parameters and/or setting the luminous light stream in accordance with the data transmitted from the remote control center through a radio link.

6. "SMART LED STREET LAMP DESIGNED FOR SAVING ENERGY, MONITORED AND CONTROLLED BY A REMOTE CONTROL CENTER", defined by all that has been claimed and described in the attached paper and in the tables with the drawings and for the specified aims.
